Europäisches Patentamt

European Patent Office

Office européen des brevets

(19)

(11) Publication number: **0 164 848**
**B1**

## EUROPEAN PATENT SPECIFICATION

(12)

(45) Date of publication of patent specification: **06.09.89**

(21) Application number: **85302785.2**

(22) Date of filing: **18.04.85**

(51) Int. Cl.⁴: **A 23 K 1/16,** A 23 K 1/175, A 23 K 1/18

(54) **Sugar block and its use in rearing animals.**

(30) Priority: **18.04.84 JP 76446/84**

(43) Date of publication of application:
**18.12.85 Bulletin 85/51**

(45) Publication of the grant of the patent:
**06.09.89 Bulletin 89/36**

(84) Designated Contracting States:
**BE DE FR GB IT NL**

(56) References cited:
**FR-A-2 350 060**
**GB-A-1 012 550**
**US-A-3 087 820**

**The file contains technical information
submitted after the application was filed and
not included in this specification**

(73) Proprietor: **TOYO JOZO KABUSHIKI KAISHA
632-1 Mifuku Ohito-cho
Tagata-gun Shizuoka-ken (JP)**

(72) Inventor: **Sasagawa, Tutomu
140-3, Mifuku Ohito-cho
Tagata-gun Shizuoka-ken (JP)**

(74) Representative: **Woods, Geoffrey Corlett et al
J.A. KEMP & CO. 14 South Square Gray's Inn
London WC1R 5EU (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

**Description**

This invention relates to sugar blocks for rearing animals and to a method for rearing animals therewith.

Growth promotion of animals by feeding them with powder, granules or pellets to which vitamins, minerals or fatty oils and molasses have been added is known (JP—A—56—144059 and 58—47442). Further in order to provide sodium balance for herbivora fed on high potassium content grass, it is known to provide compressed blocks of sodium chloride to be licked (JP—A—55—26814). It is not the object of these rearing techniques to deal with stress in animals.

Stress in animals is primarily caused by three factors. These are feeding, the environment in which the animals are reared and psychological factors. Examples are too few feeding vessels and an insufficient water supply, noise, sudden change of bed temperature, insufficient ventilation, high humidity of bed, rearing in overcrowded conditions and under-exercise.

Among these, rearing in overcrowded conditions is a particularly serious problems. For example, tail and ear biting occurs where pigs are bred in overcrowded conditions (Disease of pig: Kindai Publ. Co., page 745, 1983). In order to prevent such symptoms of stress, for avoiding dullness on pigs, iron chains or used tyres may be hung free for the pigs to bite. Alternatively, straw bedding may be supplied in a pigsty for biting.

Generally, such negative preventative methods for stress release have only been used. Increase in stress in pigs has coincided with the introduction of new breeding administration systems. Modern breeding methods, for example, expansion of the scale of breeding, automated centralised administration of pigsties and work systems are thought to affect the attitude and temper of pigs. These methods may not give, therefore, the desired results.

US—A—3087820 is concerned with providing "licks" to enable animals to make up deficiencies of diet in natural grazing or to obtain nutrient, prophylactic or therapeutic substances. In particular, US—A—3087820 is concerned with a "lick" comprising a solid, homogeneous admixture of glucose with a minor amount of chalk. The aim of such a "lick" is to reduce the risk of loss of water soluble substances through the action of rain and dew.

GB—A—1012550 relates to solid feed supplements which compensate for a magnesium deficiency in an animal's diet. A solid feed supplement is provided comprising a block of a crystallised sugar and at least one non-toxic magnesium compound and at least one non-toxic inorganic sodium salt in admixture therewith.

FR—A—2350060 is also concerned with magnesium supply. Blocks are provided for cattle to lick which comprise at least 5% by weight of magnesium and at least one sugar which may be glucose. The blocks have a compressive strength of from 300 to 600 Kg/cm².

Rather than a passive treatment for avoiding stress in pigs such as relieving tedium, we have found that stress can effectively be avoided by providing a glucose block for the pigs to bite and/or lick which has a size and hardness such that it can not be easily swallowed. Further, we have found that feed conversion ratio can be improved by stimulating salivation and an ingestive nerve center. The invention has general applicability to other animals. Moreover, essential components such as vitamins, minerals and other nutrients required by animals, for example electrolytes for prevention of dehydration in calves and iron to prevent iron deficiency in piglets, can advantageously be incorporated in the sugar block.

Accordingly, the present invention provides a sugar block for an animal to lick or bite comprising glucose and water and having such a shape and hardness that the block can neither be easily swallowed nor easily crumbled by the animal, wherein the block comprises more than 50% by weight of glucose, and from 0.1 to 20% by weight of water and from 0 to 1% by weight of a magnesium compound and has a compressive strength of from 5 to 150 Kg/cm².

The present invention further provides a method of rearing an animal, which method comprises providing a sugar block according to the invention for the animal to bite and/or lick, especially when fattening or weaning the animal.

It is then possible to prevent stress in animals and, for example, avoid occurrences such as tail and ear biting. Growth promotion and feed conversion ratio may be improved.

Sugar blocks can be made by molding. They may be prepared for example, in the following three ways:

1. Glucose powder is press-molded by compression molding. Stearic acid or magnesium stearate are preferably added as a smoothing agent.

2. Glucose solution is allowed to solidify in a suitable vessel.

3. A previously molded solid glucose block is cut into suitably shaped blocks.

A reason why glucose (over 50% w/w) is selected as the main component is that a polysaccharide such as starch, dextrin, lactose or sucrose can not directly be absorbed and is absorbed after digestion *in vivo*, is easily covered with mold (fungi) or is less sweet. Also sucrose has the disadvantage of abnormal fermentation in intestine. Further, fructose and xylitol are expensive.

The size, shape and hardness of a sugar block are preferably selected as follows:

(1) Weight: Over 50 g, preferably over 500 g. Preferably over 25 kg according to the kind of animal. For piglets, the amount may preferably be an amount which the piglets (for example approximately 10 piglets) can ingest within 1—3 weeks.

(2) Shape: Length (width): at least over 2 cm, preferably at least one dimension 12 cm or greater: Spherical, stick-like as a cylindrical column or rectangular cross-sectioned stick, semi-conical, semicircular, hollow shaped such as doughnut and bowl-shaped. Blocks which can be hung above the ground are preferable from the point of view of sanitary conditions. Doughnuts and sticks are preferable. In case of a doughnut, its inner diameter should be such that a pig's nose can easily go through the doughnut's hole. Thus a small diameter is needed for piglets and a large diameter for grown pigs. For example, a doughnut may have an outer diameter of from 12 to 20 cm and an inner diameter of from 6 to 16 cm and the ring of the doughnut can have a width of from 3 to 6 cm. For licking the sugar block, a stick e.g. a cylindrical column, rectangular prism or other shape is preferably selected. The stick may be from 25 to 40 cm long with a width of from 3 to 8 cm. Cuboids from 20 to 40 cm $\times$ 6 to 18 cm $\times$ 3 to 15 cm may be used too. A protector such as one made of plastics can be attached to the sugar block for controlling the crumbliness of the block.

(3) Compression strength: over 5 Kg/cm$^2$, preferably from 50 to 150 Kg/cm$^2$.

(4) Water content: from 0.1 to 20%, preferably from 0.2 to 15%, by weight.

(5) Other: pH 3 to 7 when dissolved as a 5 to 10% sugar block solution.

(6) Ingredients: Glucose content is over 50%, preferably over 70%. Other ingredients can be added in order to improve the taste and strength of a block.

Sugars other than glucose; an artificial sweetener; seasonings, flavorings, acidics such as citric acid, tartaric acid, malic acid or lactic acid; antibiotics such as bacitracin, penicillins, aminosugars, tetracyclines, macrolides, polysaccharides, polypeptides or polyethers; synthetic antimicrobial agents such as olaquindos, carbadox or sulfonamides; hemostatic agents such as tranexamic acid; anthelmintics; live bacteria (prebiotics); enzymes; vitamins such as vitamin A, $D_2$, $D_3$, E, $K_1$, $K_2$, $B_1$, $B_2$, $B_6$, $B_{12}$, C, pantothenic acid, folic acid, biotin, nicotinic acid, cholin or inositol; amino acids such as glycine, methionine, tryptophan, lysine, alanine, isoleucine or threonine; salts or electrolytes such as magnesium sulfate, calcium carbonate, magnesium carbonate, potassium iodide, calcium phosphate, sodium chloride, sodium citrate, potassium chloride, manganese carbonate, zinc carbonate, copper sulfate, cobalt sulfate, sodium dihydrogen phosphate, potassium phosphate, sodium acetate, potassium acetate, calcium lactate, magnesium acetate, calcium gluconate or ferrous fumarate; coloring agents; antiseptics; antioxidant; and caking agents such as dextrin, gum arabic, sodium carboxy methyl cellulose or sodium polyacrylic acid; can be added alone or in adequate combination.

The sugar block of the present invention is preferably supplied to the animals residing in breeding sheds, especially animals at fattening stage in weaning period.

The following Examples illustrate the present invention. Percentages are by weight.

### Example 1: Preparation of sugar block

Magnesium stearate 1% was mixed with purified glucose powder and pressed at 1000 Kg/cm$^2$ by oil pressure equipment to obtain a doughnut-shaped sugar block, weight 500 g, outer diameter 13 cm $\times$ inner diameter 7.5 cm $\times$ width 4 cm.

Water content: 9.2%. Compression strength: 80 Kg/cm$^2$.

### Example 2: Preparation of sugar block

Dextrin 5%, DL-tryptophan 0.05%, dry copper sulfate 0.05%, ferrous fumarate 0.3% and magnesium stearate 1.0% were mixed with anhydrous glucose powder, and pressed at 1000 Kg/cm$^2$ by oil pressure equipment to obtain a sugar block, weight 1 Kg, in the form of a rectangular prism 27.5 cm long $\times$ 7 cm wide $\times$ 4 cm wide.

Water content: 0.19%. Compression strength: 70 Kg/cm$^2$.

### Example 3: Preparation of sugar block

Starch enzymatic hydrolysate glucose solution was concentrated *in vacuo* to prepare Brix (20°C) 85 glucose solution. Purified glucose powder was added at 3% w/w thereto. The mixture was poured into a cylindrical vessel, diameter 4 cm, length 30 cm, and allowed to stand for a day and night at room temperature to set.

A cylindrical sugar block, weight 500 g, was obtained.

Water content: 10.5%. Compression strength: 90 Kg/cm$^2$.

Brix-value, water content and compression strength obtained by the crystallization procedure were shown in Table 1.

Table 1

| | After standing all day and night | | |
|---|---|---|---|
| Brix (20°C) | Water Content (%) | Compression Strength $(Kg/cm^2)$ | |
| 77.3 | 21.3 | - | |
| 77.9 | 18.3 | 5.2 | |
| 80.0 | 17.5 | 6.6 | |
| 82.0 | 14.9 | 25 | |
| 83.5 | 12.9 | 40 | |
| 85.9 | 10.3 | 90 | |
| unmeasurable | 7.9 | 140 | |

Example 4: Preparation of sugar block

Starch hydrolysate glucose solution was concentrated *in vacuo* to obtain Brix (20°C) 85 glucose solution.

Vitamin A 500,000 μ/g powder 0.8 g, vitamin $D_3$ powder 0.16 g, vitamin E 50% powder 2.0 g, vitamin C calcium 2.0 g, vitamin $B_{12}$ 50 dilution powder 0.05 g, ferrous fumarate 3.2 g, dry copper sulfate 0.5 g, calcium iodate 0.1 g, anhydrous citrate 5 g, sodium chloride 10 g, sodium propionate 1 g, milk flavour proper quantity and purified glucose powder 30 g were mixed at 70 to 80°C with per Kg weight of the glucose solution to obtain a mixed solution. The mixed solution, 500 g, was poured into a doughnut-type plastics vessel, outer diameter 13 cm, inner diameter 7.5 cm, depth 5 cm, and allowed to stand for a day and a night at room temperature to set. A doughnut-type sugar block was obtained.

Water content: 10.0%. Compression strength: 80 $Kg/cm^2$.

Example 5: Preparation of sugar block

Purified glucose powder was heated at 120°C to prepare liquid glucose. To the glucose liquid, 1 kg, were added at 70 to 80°C, kitasamycin base 5 g (potency), carbadox 3 g, skim milk 10 g, sodium propionate 1 g and purified glucose powder 30 g. This mixture was poured into a rectangular prism plastics vessel, 30 cm long, 7 cm wide, 5 cm deep and allowed to stand for a day and a night to set. A stick sugar block was obtained.

Water content: 9.0%. Compression strength: 120 $Kg/cm^2$.

Example 6: Preparation of sugar block

Dextrin 5% and magnesium stearate 1% were mixed with purified glucose powder, and poured into a mortar vessel, 27.5 cm long, 7 cm wide. The mixture was pressed by an oil hydraulic press machine to prepare sugar blocks of various shapes. In Table 2, the relationship between the width of a block and compression strength tested on piglets is shown. Water content was 9.5%.

Table 2

| Compression strength ($Kg/cm^2$) | Size 27.5 cm X 7 cm X x cm | | | |
|---|---|---|---|---|
| | x = 1 cm | 2 cm | 4 cm | 6 cm |
| 5 | - | - | - | ± |
| 50 | - | + | + | + |
| 100 | - | + | + | + |
| 150 | - | + | + | ++ |
| 180 | - | +++ | +++ | +++ |

In the table, the block:
- − : easily crumbled
- ± : all eaten up within 1 week
- + : eaten up within 1—3 weeks
- ++ : partially eaten up within 3 weeks
- +++ : not eaten up over 3 weeks

Field test using sugar block: Test for improvement in body weight increase and effective feed conversion ratio

The sugar block prepared in Example 1 was used.

Piglets, 6.5 kg weight of weaning period were bred for 4 weeks. Body weight increase and effective feed conversion ratio were observed. A group supplied with a sugar block and a second (control) group which was not provided with a sugar block were set up. The groups tested and items checked are shown in Table 3. Three times the tests were carried out. Commercially available feed was used in the test periods. Water was freely supplied.

The results are shown in Table 4. Twice for the test periods 0 to 2 weeks and 2 to 4 weeks, and three times in the test period 0 to 4 weeks (whole period) were the body weight increases significantly different from the control at $P < 0.05$. Improvement in the effective feed conversion ratio was observed. In the control group, much struggling was observed and many less than fully grown piglets were found. In the group supplied sugar block no or fewer struggles were observed and each individual had grown stably.

Table 3

Test groups and items checked

| Test group | Number of animals | Number of sugar blocks supplied | Items checked | | |
|---|---|---|---|---|---|
| | | | body weight | amount of feed con-sumption | general obser-vation |
| Sugar block supply | 10 | One block at any time and supplied when eaten up. | Week 0 (at start of test). Week 2, week 4 (at the end of test) | Week 2 and 4 (at the end of test) | Observe every day |
| Control | 10 | - | the same as above | the same as above | the same as above |

Note: All tests were repeated three times.

Effect of prevention of stress in pigs

One group of 15 piglets were supplied with 30 kg sugar block (15 piglets) whilst a second (control) group of 15 piglets were not provided with a sugar block. Each group was reared in overcrowded conditions in an area of 5m². General symptoms were observed for 2 weeks. In the control group, after the 7th day, many struggles between piglets were observed. From the 9th day onwards many piglets bleeding from tail and ear bites were found. On the contrary, in the group supplied with a sugar block fewer struggles were observed between piglets and no tail or ear bites were found during the test period. The results are shown in Table 5. The supplying of a sugar block of the present invention provides a relaxation from stress for the pigs.

TABLE 4

| Test times | Test group | Body weight (Kg) | | | Body weight increased (Kg) | | | Amount of feed intake (Kg) | | | feed conversion ratio | | |
|---|---|---|---|---|---|---|---|---|---|---|---|---|---|
| | | 0 week | 2 week | 4 week | 0~2** | 2~4** | 0~4** | 0~2** | 2~4** | 0~4** | 0~2** | 2~4** | 0~4** |
| 1st | Sugar block supply group | 6.82±1.14 | 12.11±2.15 | 18.89±3.34 | 5.29±1.12 | 6.78±1.34* | 12.07±2.30* | 8.09 | 13.36 | 21.45 | 1.53 | 1.97 | 1.78 |
| 1st | Control group (unsupplied) | 6.99±0.92 | 11.15±2.23 | 16.47±3.65 | 4.16±1.36 | 5.32±1.54 | 9.48±2.77 | 6.82 | 10.96 | 17.78 | 1.64 | 2.06 | 1.88 |
| 2nd | Sugar block supply group | 6.49±0.89 | 11.23±2.02 | 17.71±3.25 | 4.74±1.19* | 6.48±1.31 | 11.22±2.44* | 6.86 | 11.63 | 18.49 | 1.46 | 1.90 | 1.71 |
| 2nd | Control | 6.65±0.84 | 9.89±2.08 | 15.04±3.72 | 3.24±1.34 | 5.15±1.72 | 8.39±2.94 | 5.02 | 10.35 | 15.37 | 1.55 | 2.01 | 1.83 |
| 3rd | Sugar block supply group | 6.22±1.08 | 10.67±2.14 | 17.27±3.29 | 4.45±1.26* | 6.60±1.27* | 11.05±2.45* | 6.59 | 12.14 | 18.73 | 1.48 | 1.84 | 1.70 |
| 3rd | Control | 6.21±1.07 | 9.37±2.14 | 14.20±3.59 | 3.16±1.21 | 4.83±1.56 | 7.99±2.64 | 4.93 | 9.61 | 14.53 | 1.56 | 1.99 | 1.82 |

** week
* Significantly different from control: $P < 0.05$

EP 0 164 848 B1

Table 5    Number of tail and ear bites[1]

| Test group | Number of animals | After starting the test | | | | | |
|---|---|---|---|---|---|---|---|
| | | 9th day | 10th day | 11th day | 12th day | 13th day | 14th day |
| group supplied with sugar block | 1 5 | $^0/_{1\,5}$ [2] | $^0/_{1\,5}$ | $^0/_{1\,5}$ | $^0/_{1\,5}$ | $^0/_{1\,5}$ | $^0/_{1\,5}$ |
| control group | 1 5 | $^2/_{1\,5}$ | $^2/_{1\,5}$ | $^4/_{1\,5}$ | $^5/_{1\,5}$ | $^5/_{1\,5}$ | $^6/_{1\,5}$ |

1)  Calculated as piglets showing bleeding

2)  $\dfrac{\text{Number of animals bitten}}{\text{Number of animals tested}}$

EP 0 164 848 B1

# EP 0 164 848 B1

**Claims**

1. A sugar block for an animal to lick or bite, comprising glucose and water and having such a shape and hardness that the block can neither be easily swallowed nor be easily crumbled by the animal; characterised in that the block comprises more than 50% by weight of glucose, from 0.1 to 20% by weight of water and from 0 to 1% by weight of a magnesium compound and has a compressive strength of from 5 to 150 $Kg/cm^2$.

2. A block according to claim 1, wherein the glucose content is more than 70% w/w.

3. A block according to claim 1 or 2, which is 500 g or more in weight.

4. A block according to any one of the preceding claims, which has at least one dimension 12 cm or greater.

5. A block according to any one of the preceding claims, which has a compressive strength from 50 to 150 $Kg/cm^2$.

6. A block according to any one of the preceding claims, which has a water content of from 0.2 to 15% by weight.

7. A block according to any one of the preceding claims, which is a doughnut or stick.

8. A block according to any one of the preceding claims, wherein the magnesium compound is magnesium stearate.

9. A method of rearing an animal, characterised by providing a sugar block as claimed in any one of the preceding claims for the animal to lick and/or bite.

10. A method according to claim 9, wherein the animal is being fattened.

11. A method according to claim 9 or 10, wherein the animal is being weaned.

**Patentansprüche**

1. Zuckerblock für Tiere zum Ablecken oder Abbeißen, der Glucose und Wasser enthält, und eine derartige Form und Härte aufweist, daß der Block von den Tieren weder leicht veschluckt noch leicht zerbröckelt werden kann, dadurch gekennzeichnet, daß der Block mehr als 50 Gew.-% Glucose, 0,1 bis 20 Gew.-% Wasser und 0 bis 1 Gew.-% einer Magnesiumverbindung enthält, und eine Druckfestigkeit von 5 bis 150 $kg/cm^2$ aufweist.

2. Block nach Anspruch 1, worin der Glucosegehalt mehr als 70 Gew.-% beträgt.

3. Block nach Anspruch 1 oder 2, der ein Gewicht von 500 g oder mehr aufweist.

4. Block nach einem der voranstehenden Ansprüche, der mindestens eine Dimension von 12 cm oder größer aufweist.

5. Block nach einem der voranstehenden Ansprüche, der eine Druckfestigkeit von 50 bis 150 $kg/cm^2$ aufweist.

6. Block nach einem der voranstehenden Ansprüche, der einen Wassergehalt von 0,2 bis 15 Gew.-% aufweist.

7. Block nach einem der voranstehenden Ansprüche, welcher eine Ringröhre oder einen Stab darstellt.

8. Block nach einem der voranstehenden Ansprüche, worin die Magnesiumverbindung Magnesiumstearat ist.

9. Verfahren zur Aufzucht eines Tieres, dadurch gekennzeichnet, daß ein Zuckerblock nach einem der voranstehenden Ansprüche für das Tier zum Ablecken oder Abbeißen zur Verfügung gestellt wird.

10. Verfahren nach Anspruch 9, worin das Tier gemästet wird.

11. Verfahren nach Anspruch 9 und 10, worin das Tier entwöhnt wird.

**Revendications**

1. Bloc de sucre à lécher ou mordre par un animal, contenant du glucose et de l'eau et ayant une forme et une dureté telles que le bloc ne peut être, ni aisément avalé, ni aisément désagrégé par l'animal, caractérisé en ce que le bloc contient plus de 50% en poids de glucose, de 0 à 20% en poids d'eau et de 0 à 1% en poids d'un composé de magnésium, et qu'il a une résistance en compression comprise entre 5 et 150 $kg/cm^2$.

2. Bloc selon la revendication 1, dans lequel la teneur en glucose est supérieure à 70% en poids.

3. Bloc selon la revendication 1 ou 2, dont le poids est égal ou supérieur à 500 g.

4. Bloc selon l'une quelconque des revendications précédentes, qui a une dimension égale ou supérieure à 12 cm.

5. Bloc selon l'une quelconque des revendications précédentes, qui a une résistance en compression comprise entre 50 et 150 $kg/cm^2$.

6. Bloc selon l'une quelconque des revendications précédentes, qui a une teneur en eau comprise entre 0,2 et 15% en poids.

7. Bloc selon l'une quelconque des revendications précédentes, qui a la forme d'un tore ou d'une barre.

8. Bloc selon l'une quelconque des revendications précédentes, dans lequel le composé de magnésium est du stéarate de magnésium.

9

9. Procédé d'élevage d'un animal, caractérisé en ce qu'on procure à l'animal un bloc de sucre, selon l'une quelconque des revendications précédentes, à lécher et/ou à mordre.

10. Procédé selon la revendication 9, dans lequel l'animal est en cours d'engraissage.

11. Procédé selon la revendication 9 ou 10, dans lequel l'animal est en cours de sevrage.